Europäisches Patentamt

(19) European Patent Office

Office européen des brevets

(11) Veröffentlichungsnummer: **0 096 791**
B1

(12) EUROPÄISCHE PATENTSCHRIFT

(45) Veröffentlichungstag der Patentschrift:
09.04.86

(51) Int. Cl.⁴: **F 16 L 59/12, F 16 L 59/14**

(21) Anmeldenummer: 83105341.8

(22) Anmeldetag: 30.05.83

(54) Isolierung für Heissgasrohrleitung.

(30) Priorität: 11.06.82 DE 3222121

(43) Veröffentlichungstag der Anmeldung:
28.12.83 Patentblatt 83/52

(45) Bekanntmachung des Hinweises auf die Patenterteilung:
09.04.86 Patentblatt 86/15

(84) Benannte Vertragsstaaten:
DE FR GB

(56) Entgegenhaltungen:
EP - A - 0 000 497
DE - A - 3 125 440
DE - A - 3 223 246
GB - A - 1 368 185

(73) Patentinhaber: INTERATOM Gesellschaft mit beschränkter Haftung, Friedrich-Ebert-Strasse, D-5060 Bergisch Gladbach 1 (DE)

(72) Erfinder: Stausebach, Dieter, Dipl.-Ing., Reginharstrasse 28, D-5060 Bergisch-Gladbach 1 (DE)

(74) Vertreter: Mehl, Ernst, Dipl.-Ing. et al, Postfach 22 01 76, D-8000 München 22 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Isolierung für Heißgasrohrleitungen nach dem Oberbegriff des 1. Anspruchs. Die Verwendung von derartigen Rohrleitungen ist z.B. für Kernenergieanlagen vorgesehen, die mit einem gasgekühlten Hochtemperaturreaktor betrieben werden. Dabei wird von Betriebstemperaturen bis zu 950° C ausgegangen. Zur Bewältigung dieser hohen Temperaturen soll die Rohrleitung aus einem inneren, die Strömungsführung übernehmenden aber nicht druckdichten Rohr aus einer hitzebständigen Keramik und einem äußeren metallischen, den Druckeinschluß übernehmenden Rohr aufgebaut sein, wobei zwischen Innen- und Außenrohr ein Isolierstoff eingebracht wird, der dafür sorgt, daß die im Innenrohr herrschende hohe Betriebstemperatur auf eine für den metallischen Werkstoff des Außenrohres noch zulässige Stufe, z.B. von 300° C abgebaut wird. Als Isolierstoff sind vorzugsweise mineralische Fasern vorgeschlagen worden.

Die beschriebene Rohrleitung wird wie andere Rohrleitungen auch aus einzelnen Schüssen zusammengesetzt, die im Falle des Außenrohres bei der Montage druckdicht zusammengeschweißt werden. Diese Möglichkeit besteht für das keramische Material des Innenrohres nicht, so daß hier die einzelnen Schüsse nur zusammengesteckt werden können, wobei die Stoßstellen durch wechselseitige Überlappungen so ausgebildet werden, daß die einzelnen Schüsse auch bei durch Temperaturwechsel bedingten Längenänderungen aufeinander zentriert bleiben und daß der zwischen ihnen auftretende Spalt größtenteils abgedichtet wird. Gleiches gilt für die in Ballen- oder Mattenform vorliegenden Isolierstoffe, wobei auch hier eine Abdichtung der zwischen ihnen entstehenden Spalte erforderlich ist, um aus dem Innenrohr austretende heiße Gassträhnen an der Berührung des Außenrohres zu hindern. Für die Abdichtung von Spalten zwischen den nach Art eines Mauerwerks zusammengesetzten Keramikkörpern ist in der DE-A- 25 32 895 die Verwendung von Isolierfasermatten vorgeschlagen worden. Aufgabe der vorliegenden Erfindung ist eine Verbesserung der beschriebenen Abdichtung zwischen einzelnen Isolierstoffkörpern durch den Einsatz strukturierter, doch biegsamer Dichtelemente.

Die Lösung dieser Aufgabe geschieht durch die im kennzeichnenden Teil des ersten Anspruchs genannten Mittel. Aus Isolierfaser gewebte Ringe verbinden die erwünschte Flexibilität mit einer eindeutig definierten Dicke und Dichte. Durch das Aufeinanderlegen von Ringen mit nach Art eines Saumes gedoppelten Rändern werden Zonen mit hohem Anpreßdruck geschaffen, mit denen ein besonderer Grad der Dichtigkeit erreicht wird.

Durch die in Ausgestaltung der Erfindung vorgeschlagene versetzte Anordnung des Gewebes bei den zur Ausfüllung eines Spaltes bestimmter Breite erforderlichen mehreren der beschriebenen Ringe wird eine zusätzliche, die Leckströmungen hindernde Labyrinthwirkung erzielt.

Ein Ausführungsbeispiel der Erfindung ist in der Zeichnung dargestellt und zwar zeigt

Fig. 1 einen halben Längsaxialschnitt durch eine Heißgasrohrleitung,

Fig. 2 in teilweise aufgebrochener Darstellung den Stapel der zur Verwendung kommenden Dichtringe in der Ansicht und

Fig. 3 einen einzelnen dieser Ringe in der Seitenansicht.

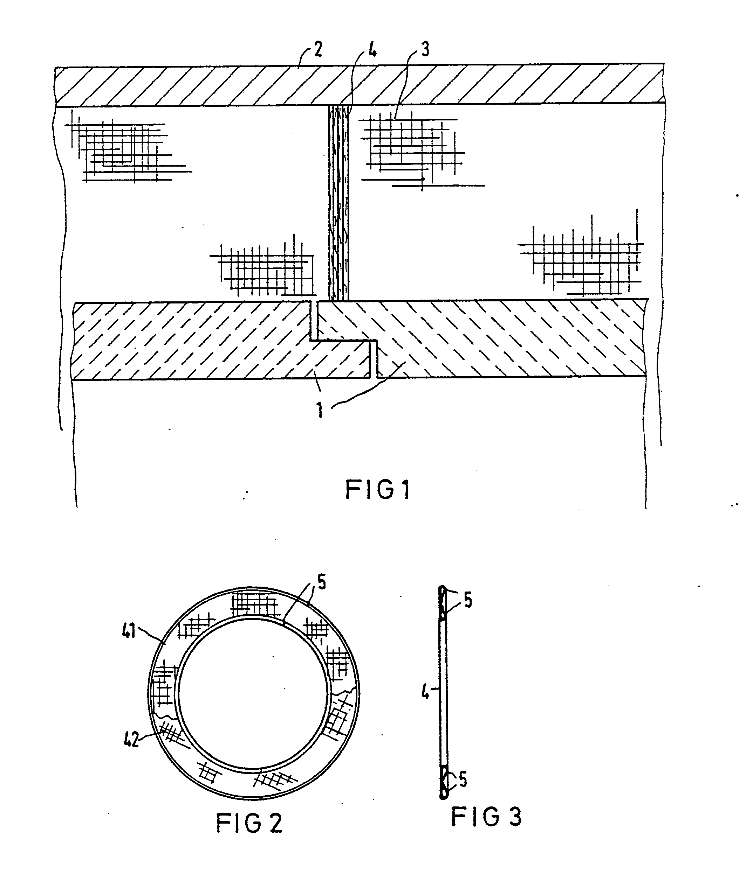

Die für den Transport heißer Fluide, beispielsweise des zur Kühlung eines Hochtemperaturkernreaktors verwendeten Heliums bestimmte Rohrleitung besteht aus einem inneren Gasführungsrohr 1, das aus einzelnen ineinandergesteckten Schüssen aufgebaut ist, von denen hier zwei Stück teilweise dargestellt sind. Dieses Rohr ist aus hitzebeständiger Keramik hergestellt, doch nicht druckdicht. Den Druckeinschluß übernimmt vielmehr ein äußeres, aus einem metallischen Werkstoff hergestelltes Rohr 2, dessen einzelne Schüsse in bekannter Weise druckdicht miteinander verschweißt sind. Die hierfür verwendeten metallischen Werkstoffe sind jedoch außerstande, der hohen im Innenrohr herrschenden Temperatur standzuhalten. Der Zwischenraum zwischen beiden Rohren ist daher mit einer Isolierung 3, z.B. aus übereinander gewickelten Matten aus einem mineralischen Isolierstoff ausgefüllt. Auch zwischen diesen können ebenso wie zwischen den einzelnen Schüssen des Innenrohrs 1 durch Temperaturwechsel bedingt Spalte sich bilden. durch die eine Leckströmung heißen Fluids bis in die Nähe des Außenrohres gelangen und dieses in seiner Festigkeit gefährden kann. Zwischen den einzelnen Schüssen der Isolierung 3 sind daher mehrere, im dargestellten Beispiel vier Ringe 4 angeordnet, die über das Innenrohr 1 geschoben sind und aus einer Mineralfaser gewebt sind Am Innen- wie am Außenrand sind die Ringe 4 mit Dopplungen versehen, vorzugsweise nach Art eines Saumes genäht. Die so verdoppelte Dicke der Ringe ermöglicht in diesem Bereich eine erhöhte Flächenpressung und damit eine verbesserte Dichtwirkung. Eine weitere Verbesserung ergibt sich daraus, daß (siehe Fig 2) die verschiedenen aufeinander gestapelten Ringe 41, 42,..... in ihrem Webverband winklig zueinander angeordnet sind, z.B. um jeweils 25° von einem Ring 41 zum anderen 42.

## Patentansprüche

1. Aus einzelnen Schüssen aufgebaute keramische Isolierung (3) für Fluide hoher Temperatur führende, mit einem inneren Führungs- (1) und einem äußeren Druckrohr (2) versehene Rohrleitungen, welche Isolierung zwischen dem inneren Führungs und dem äußeren Druckrohr angeordnet ist und Spalten zwischen den Schüssen hat, die mit einem faserförmigen keramischen Isoliermaterial ausgefüllt sind,
dadurch gekennzeichnet, daß das zwischenden Schüssen angeordnete faserförmige Isoliermaterial die Gestalt von mehreren aufeinander gelegten, konzentrisch über das Führungsrohr (1) geschobenen, aus einer Isolierfaser gewebten Ringen (4) mit gedoppelten Rändern (5) hat.

2. Isolierung nach Anspruch 1,
dadurch gekennzeichnet,
daß die einzelnen Ringe (41, 42) mit angular zueinander versetztem Webverband angeordnet sind.

## Claims

1. Ceramic insulation (3) for pipelines which carry high temperature fluids and which have an internal guide pipe (1) and an external pressure pipe (2), which insulation is constructed from individual courses, is arranged between the internal guide pipe and the external pressure pipe, and has gaps between the courses which are filled with a fibrous ceramic insulating material, characterised in that the fibrous insulating material arranged between the courses is in the form of a plurality of juxtaposed concentric rings (4) slipped over the guide pipe (1) and which are woven from insulating fibre and have doubled rims (5).

2. Insulation as claimed in Claim 1, characterised in that the individual rings (41, 42) are arranged so as to have their weaves angularly offset with respect to one another.

## Revendications

1. Isolation (3) en céramique, constituée de tronçons individuels, pour des canalisations conduisant des fluides à température élevée et munies d'un tuyau intérieur (1) de conduite et d'un tuyau extérieur (2) résistant à la pression, l'isolation étant interposée entre le tuyau intérieur de conduite et le tuyau extérieur résistant à la pression, les intervalles entre les tronçons étant remplis d'un matériau céramique isolant fibreux, caractérisée en ce que le matériau isolant fibreux disposé entre les tronçons affecte la forme de plusieurs anneaux (4) posés les uns sur les autres, enfilés concentriquement sur le tuyau (1) de conduite, tissés en fibre isolante et ayant des borde (5) redoublés.

2. Isolation suivant la revendication 1, caractérisée en ce que les tissages des anneaux individuels (41, 42) font un angle entre eux.

FIG 1

FIG 2

FIG 3